Europäisches Patentamt

European Patent Office

Office européen des brevets

(19)

(11) Publication number: **0 189 241**
A1

(12)

# EUROPEAN PATENT APPLICATION

(21) Application number: 86300046.9

(22) Date of filing: 06.01.86

(51) Int. Cl.⁴: **B 60 G 3/28**, B 62 D 23/00

(30) Priority: 18.01.85 US 692460

(43) Date of publication of application: 30.07.86
Bulletin 86/31

(84) Designated Contracting States: DE FR GB IT

(71) Applicant: FORD MOTOR COMPANY LIMITED, Eagle
Way, Brentwood Essex CM13 3BW (GB)
(84) Designated Contracting States: GB

(71) Applicant: FORD-WERKE AKTIENGESELLSCHAFT,
Ottoplatz 2 Postfach 21 03 69, D-5000 Köln 21 (DE)
(84) Designated Contracting States: DE
(71) Applicant: FORD FRANCE SOCIETE ANONYME,
344 Avenue Napoléon Bonaparte B.P. 307, F-92506 Rueil
Malmaison Cedex (FR)
(84) Designated Contracting States: FR
(71) Applicant: Ford Motor Company, The American Road,
Dearborn, MI 48121 (US)
(84) Designated Contracting States: IT
(72) Inventor: Hadded, Charles, 4921 Watergate Road, West
Bloomfield Michigan 48033 (US)
Inventor: Holka, Thomas C., Old Milford Farms Drive,
Milford Michigan 48042 (US)
Inventor: Marvin, Brian D., 42508 Saltz, Canton
Michigan 48187 (US)
(74) Representative: Messulam, Alec Moses et al, A.
Messulam & Co. 24 Broadway, Leigh on Sea Essex
SS9 1BN (GB)

(54) A motor vehicle chassis.

(57) A motor vehicle chassis comprises a central structural section (2) having front and rear longitudinal control arms (10, 12) which are pivoted about substantially transverse axes. Each front and rear suspension uses a single transverse leaf spring (17).

# A MOTOR VEHICLE CHASSIS

This invention relates generally to automotive chassis having independent suspension systems for both front and rear wheels and more particularly to independent suspension systems using longitudinally extending control arms pivotally attached to a central passenger compartment.

The automotive chassis of the present invention includes longitudinally extending control arms which are hinged about transverse axes to a central passenger compartment.

U.S. Patent 2,554,261 to Munger discloses a vehicle having a skeletonized frame in which front and rear control arms are attached to transverse axes. U.S. Patent 2,001,846 to Ledwinka discloses another arrangement in which leading and trailing longitudinally extending arms are attached to the side rails of a perimeter frame. U.S. Patent 2,888,271 to Butterfield discloses yet another arrangement for leading and trailing suspension arms attached to the side rails of the vehicle frame.

According to the invention there is provided claim a motor vehicle chassis comprising, a central structural section comprising a passenger compartment terminating at its leading and trailing ends in panels, and a suspension system comprising longitudinally extending control arms pivotally attached to at least said leading or trailing ends of said central structural section.

The present invention offers the advantage of compactness and weight reduction over the designs utilzied by others. The chassis and suspension arrangement of the present invention needs no structure to support the suspension lying outboard of the central structural section with the exception of a cowl extension which connects the front spring and front shock absorbers with the remainder of the dash panel and brackets serving a similar purpose with respect to the rear spring.

The central structural section terminates at its leading end in a dash panel and at its trailing end in a kickup panel. The central structural section may be of unitized construction or may have a separate frame and body panels. In either case, the front of the structural section ends with a dash panel running substantially vertically upward from the bottom of the structural section and a rear kickup panel running substantially vertically upward from the back of the structural section. Left and right front control arms are pivoted to the dash panel about substantially transverse axes and extend longitudinally forward from the dash panel. Left and right rear control arms are pivoted to the kickup panel about substantially transverse axes and extend longitudinally rearward from the kickup panel. Left and right front wheel carriers are attached to the left and right front control arms and left and right rear wheel carriers are attached to the left and right rear control arms.

Front and rear transverse leaf springs are attached respectively to a cowl extension of the dash panel and to the kickup panel. The outboard ends of the front leaf spring are attached to the wheel carriers and the outboard ends of the rear leaf spring are attached to the rear control arms. At least one telescoping shock absorber is provided between each control arm and the dash panel in the front and between each control arm and the kickup panel in the rear of the chassis. A steering gear is operably attached to the left and right front wheel carriers and affixed to the dash panel.

The invention will now be described further by way of example, with reference to the accomanying drawings in which:

Figure 1 is a perspective view of the central structural section of the chassis of the present invention,

Figure 2 is a perspective view of the front suspension and front portion of the central structural section of the chassis of the present invention,

Figure 3 is a cross-sectional view of the bushing mounts for the transverse leaf springs included in the chassis of the present invnetion, and

Figure 4 is a perspective view of the rear suspension and kickup panel of the chassis of the present invention.

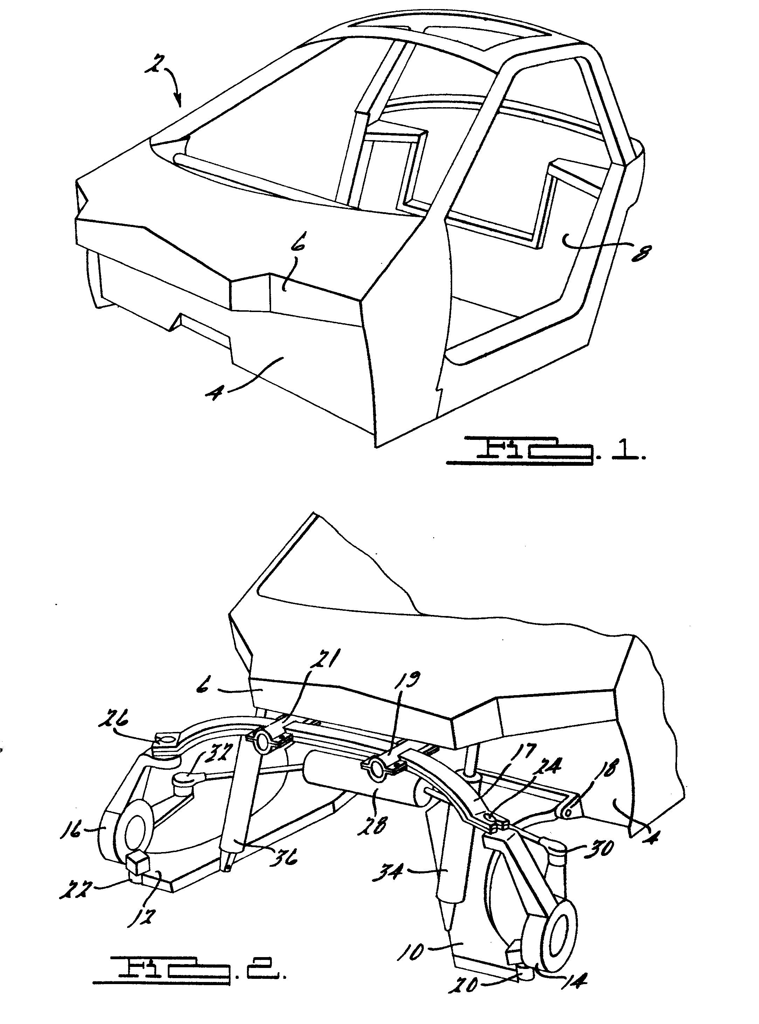

As shown in Figure 1, central structural section 2 includes a space for passengers and baggage as well as front dash panel 4 and rear kickup panel 8 to which the front and rear suspension respectively, are attached.

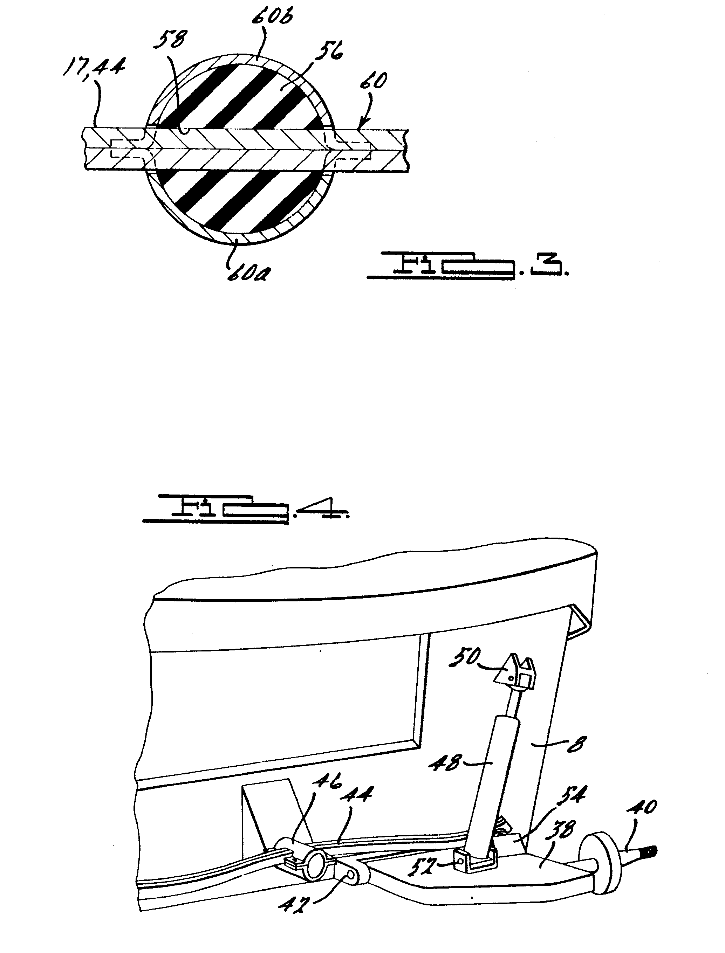

Cowl extension 6 provides means for attaching front transverse spring 17 shown in Figure 2 and left and right front shock absorbers 34 and 36 to dash panel 4. Structural section 2 may be constructed as a perimeter frame on which discrete body panels are applied or as a unitized construction in which body panels and structural members are combined. Those skilled in the art of designing automobile structures will appreciate several other methods for constructing structural section 2.

The front suspension and front structure of the present invention are detailed in Figure 2. Left front control arm 10 and right front control arm 12 run longitudinally forward from dash panel 4. Front control arm 10 is pivotally attached to dash panel 4 by pivot 18 containing a pivot axis which is substantially transverse to the vehicle center line. Right control arm 12 is attached in an identical manner by a pivot which is not shown. The pivot desirably includes one or more bushing assemblies of the type described in U.S. Patent 3,111,307. Left front wheel carrier 14 and right front wheel carrier 16 are attached to the leading ends of front control arms by pivotal joints 20 and 22 respectively. Front transverse leaf spring 17 is pivotally attached to the wheel carrier at its outboard ends 24 and 26. Spring 17 is attached to cowl extension 6 by clamp assemblies 19 and 21. Clamp assemblies 19 and 21, as shown in Figure 3, comprise an inner elastomeric bushing through which the leaf spring passes and an outer housing which holds the bushing in compression. Elastomeric bushing 56 is cylindrical in shape and has a slot 58 through which the spring passes. Bushing 56 is clamped to the spring by mounting 60 which is comprised of halves 60a and 60b. The assembly shown in Figure 3 may be used for mounting both the front and rear transverse leaf springs. Other means for clamping the springs will be apparent to those skilled in the art.

As shown in Figure 2, telescoping shock absorbers 34 and 36 are pivotally attached to the front control arms at their lower ends and pivotally attached to cowl extension 6 at their upper ends. Steering gear 28 is rigidly attached to dash panel 4 by brackets (not shown) and pivotally attached at its outboard ends 30 and 32 to wheel carriers 14 and 16.

Figure 4 shows details of the rear suspension and chassis of the present invention. Only the right rear side is shown, the left rear being identical. Right rear control arm 38 is pivotally attached to kickup panel 8 by pivot 42 which has an axis generally transverse to the center line of the vehicle. Right rear wheel carrier 40 is attached to control arm 38 and provides a mounting for right rear road wheel and tire assembly (not shown). Shock absorber 48 is attached at its upper end by means of pivot assembly 50 to kickup panel 8 and at its lower end by means of pivot assembly 52 to right rear control arm. Transverse leaf spring 44 is attached to control arm 38 by means of pivot assembly 54. Spring 44 is attached to the kickup panel by means of clamp assembly 46 which is attached to the kickup panel.

The arrangements presented herein for mounting of the control arms to the dash panel and kickup panel are advantageous because no frame rails are needed extending forwardly or rearwardly of the central structural section. As a result, space and weight savings are possible over conventional chassis and suspension designs. It will be appreciated that the mounting of the front and rear control arms at the "fold lines" joining the vertical dash and kickup panels with the horizontal panels forming the passenger compartment's floor provides additional stability to the suspension inasmuch as the fold line areas are characterized by high structural strength.

The term "chassis" when used in the specification and claims, will be understood to refer to either a conventional vehicle chassis or a conventional unitary chassis and body construction, and is intended to include vehicle structure and components connected to or supported upon the chassis structure.

## CLAIMS

1.   A motor vehicle chassis comprising, a central structural section (2) comprising a passenger compartment terminating at its leading and trailing ends in panels (4,8), and a suspension system comprising longitudinally extending control arms (10,12) pivotally attached to at least said leading or trailing ends of said central structural section (2).

2.   A motor vehicle chassis according to Claim 1, further comprising a wheel carrier attached to each control arm.

3.   A motor vehicle chassis according to Claim 1, wherein said passenger compartment terminates at its leading end in a dash panel and at its trailing end in a kickup panel.

4.   A motor vehicle chassis according to Claim 3, wherein said longitudinally extending control arms comprise left and right front control arms which are pivotally attached to said dash panel about generally transversely extending axes.

5.   A motor vehicle according to Claim 4, further comprising front wheel carriers attached to each of said left and right front control arms.

6.   A motor vehicle chassis according to Claim 5, further comprising a single transverse leaf spring attached at its outboard ends to said front wheel carriers, and means for attaching said leaf spring to said dash panel in at least one location intermediate its ends.

- 8 -

7. A motor vehicle chassis according to claim 6 wherein said front wheel carriers are attached to said leaf spring and to said control arms by pivotal joints.

8. A motor vehicle chassis according to claim 6 further comprising one or more telescoping shock absorbers attached between each of said left and right front control arms and said dash panel.

9. A motor vehicle chassis according to claim 6 wherein said means for attaching said leaf spring to said dash panel comprises a pair of elastomeric isolators depending from a cowl extension attached to said dash panel.

10. A motor vehicle chassis according to claim 6 further comprising a steering gear operatively attached to said left and right front wheel carriers and fixed to said dash panel.

11. A motor vehicle chassis according to claim 3 further comprising left and right rear control arms which are pivotally attached to said kickup panel about generally transversely extending axes and to which are attached rear wheel carriers.

12. A motor vehicle chassis according to claim 11 further comprising a single transverse leaf spring attached at its outboard ends to said rear control arms and means for attaching said leaf spring in at least one location intermediate its ends to said kickup panel.

13. A motor vehicle chassis according to claim 11 wherein said means for attaching said leaf spring to said kickup panel comprises a pair of elastomeric isolators attached to said kickup panel.

14. A motor vehicle chassis according to claim 13 further comprising one or more telescoping shock absorbers attached between said left and right rear control arms and said kickup panel.

FIG.1.

FIG.2.

17,44   58   60b   56   60

60a

FIG.3.

FIG.4.

50   8   48   46   44   54   40   38   52   42

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 927 486 (DAIMLER-BENZ) <br><br> * page 11, line 11 - page 13, line 11; figure 1 * | 1-8,11 ,12 | B 60 G 3/28 <br> B 62 D 23/00 |
| A | | 9,13, 14 | |
| | --- | | |
| Y | US-A-2 177 896 (LEE) <br> * page 6, column 1, line 38 - page 7, column 1, line 9; figures 1, 3, 4, 29, 30, 40, 41 * | 1-8,10 | |
| A | | 9 | |
| | --- | | |
| Y | GB-A- 719 928 (BARENYI) <br><br> * page 1, lines 59-80 * | 1-8,10 -12 | **TECHNICAL FIELDS SEARCHED (Int. Cl.4)** |
| | --- | | B 60 G 3/00 |
| A | US-A-2 354 219 (NEWTON et al.) <br> * figure 2; page 4, column 1, lines 43-46 * | 9,13 | B 62 D 23/00 <br> B 62 D 25/00 |
| | --- | | |
| A | FR-A-1 084 798 (DAIMLER-BENZ) <br> * page 1, line 61 - page 2, line 15 * | 1 | |
| | ----- | | |

| The present search report has been drawn up for all claims | | |
|---|---|---|
| Place of search <br> BERLIN | Date of completion of the search <br> 21-03-1986 | Examiner <br> STANDRING M A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82